# EUROPEAN PATENT APPLICATION

(11) **EP 4 819 726 A1**
(43) Date of publication of application: **07.10.2026**
(21) Application number: 24896216.9
(22) Date of filing: 06.11.2024
(51) Int. Cl.: H04W 72/0453

(54) **SIGNAL SENDING METHOD AND APPARATUS, AND DEVICE**

(30) Priority: 01.12.2023 CN 202311638896
(71) Applicant: Datang Mobile Communications Equipment Co., Ltd., Beijing 100085 (CN)
(72) Inventor: GONG, Qiusha, Beijing 100085 (CN)
(74) Representative: Studio Torta S.p.A.
(86) International application number: PCT/CN2024/130167
(87) International publication number: WO 2025/113125

(57) **Abstract**

The present application provides a signal sending method and apparatus, and a device. The method comprises: a first device determining a frequency domain resource occupancy factor of an integrated sensing and communication signal and a comb configuration parameter of the integrated sensing and communication signal; generating the integrated sensing and communication signal on the basis of the frequency domain resource occupancy factor and the comb configuration parameter; and sending the integrated sensing and communication signal on the basis of the resource configuration information.

## Description

### CROSS-REFERENCE TO RELATED APPLICATION

This application claims priority to Chinese Patent Application No. 202311638896.1, entitled "SIGNAL SENDING METHOD AND APPARATUS, AND DEVICE" filed on December 1, 2023, the disclosures of which are incorporated herein by reference in its entirety.

### TECHNICAL FIELD

This application relates to the field of communications technologies, and in particular, to a signal sending method, a signal sending apparatus, and a device.

### BACKGROUND

Wireless sensing refers to acquiring environmental information by using wireless signals, where the environmental information includes distribution, a size, and a quantity of objects in the environment, human motion behaviors, and even a human respiratory frequency, a heart rate, and the like. A wireless sensing process involves simultaneously transmitting radio signals to an environment that needs to be sensed and collecting, at a receiving end, radio signals that have undergone reflection, scattering, multipath transmission by the environment.

In the related art, a sensing waveform is a communication-oriented waveform, for example, an Orthogonal Frequency Division Multiplexing (OFDM) waveform based on a communication system in the related art, or a waveform further transformed based on the OFDM waveform (such as an Orthogonal Time Frequency Space (OTFS) waveform). This type of waveform has good compatibility with communication systems. However, the specific design of sensing signals based on the OFDM waveform is not yet clear.

### SUMMARY

An objective of this application is to provide a signal sending method, apparatus, and network device for generating an OFDM waveform-based integrated sensing and communication (ISC) signal.

An embodiment of this application provides a signal sending method, including:
determining, by a first device, a frequency domain resource occupancy factor of an integrated sensing and communication (ISC) signal and a comb configuration parameter of the ISC signal;
generating the ISC signal based on the frequency domain resource occupancy factor and the comb configuration parameter; and
sending the ISC signal based on resource configuration information.

An embodiment of this application provides a device, including a memory, a transceiver, and a processor; the memory is configured to store a computer program; the transceiver is configured to receive and send data under the control of the processor; and the processor is configured to read the computer program in the memory and perform the following operations:
determining a frequency domain resource occupancy factor of an integrated sensing and communication (ISC) signal and a comb configuration parameter of the ISC signal;
generating the ISC signal based on the frequency domain resource occupancy factor and the comb configuration parameter; and
sending the ISC signal based on resource configuration information.

An embodiment of this application provides a signal sending apparatus, including:
a first determining unit, configured to determine a frequency domain resource occupancy factor of an integrated sensing and communication (ISC) signal and a comb configuration parameter of the ISC signal;
a first generating unit, configured to generate the ISC signal based on the frequency domain resource occupancy factor and the comb configuration parameter; and
a first sending unit, configured to send the ISC signal based on resource configuration information.

An embodiment of this application provides a processor-readable storage medium, where a computer program is stored, and when the computer program is executed by a processor, the steps of the foregoing signal sending method are implemented.

The above technical solution of the present application has the following beneficial effects:
in the embodiments of this application, the first device may generate corresponding integrated sensing and communication (ISC) signals for different sensing capabilities and different sensing service nodes. The generated OFDM-based sensing waveform has better compatibility with communication systems, high spectrum utilization efficiency, and higher sensing precision.

### BRIEF DESCRIPTION OF THE DRAWINGS

FIG. 1 is a schematic flowchart of a signal sending method according to some embodiments of the present disclosure;
FIG. 2 is a schematic structural diagram of a signal sending apparatus according to some embodiments of the present disclosure;
FIG. 3 is a schematic structural diagram of a device according to some embodiments of the present disclosure.

### DETAILED DESCRIPTION

To make the technical problems to be solved, technical solutions, and advantages of the present application clearer, the following detailed description will be provided with reference to the accompanying drawings and specific embodiments. In the following description, specific details such as specific configurations and components are provided merely to help comprehensively understand the embodiments of this application. Therefore, it should be apparent to those skilled in the art that various changes and modifications can be made to the embodiments described herein without departing from the scope and spirit of the present disclosure. In addition, descriptions of known functions and constructions are omitted for clarity and conciseness.

It should be understood that "one embodiment" or "an embodiment" mentioned throughout the specification means that a particular feature, structure, or characteristic related to the embodiment is included in at least one embodiment of this application. Thus, the appearances of "in one embodiment" or "in an embodiment" in various places throughout the specification are not necessarily referring to the same embodiment. Furthermore, these particular features, structures, or characteristics may be combined in any suitable manner in one or more embodiments.

In various embodiments of this application, it should be understood that the sequence numbers of the following processes do not imply an order of execution, and the execution sequence of each process should be determined by its functions and internal logic, and shall not constitute any limitation on the implementation process of the embodiments of this application.

The technical solutions in the embodiments of the present application will be clearly and completely described below with reference to the accompanying drawings in the embodiments of the present application. Obviously, the described embodiments are only some of the embodiments of the present application, rather than all of the embodiments. All other embodiments obtained by a person of ordinary skill in the art based on the embodiments of this application without creative efforts shall fall within the protection scope of this application.

Embodiments of this application provide a signal sending method, apparatus, and device for generating an OFDM-waveform-based integrated sensing and communication (ISC) signal.

The method and the apparatus are based on the same application concept. Since the method and the apparatus solve similar technical problems, the implementation of the apparatus and the method may be referred to each other, and repeated details are not described herein.

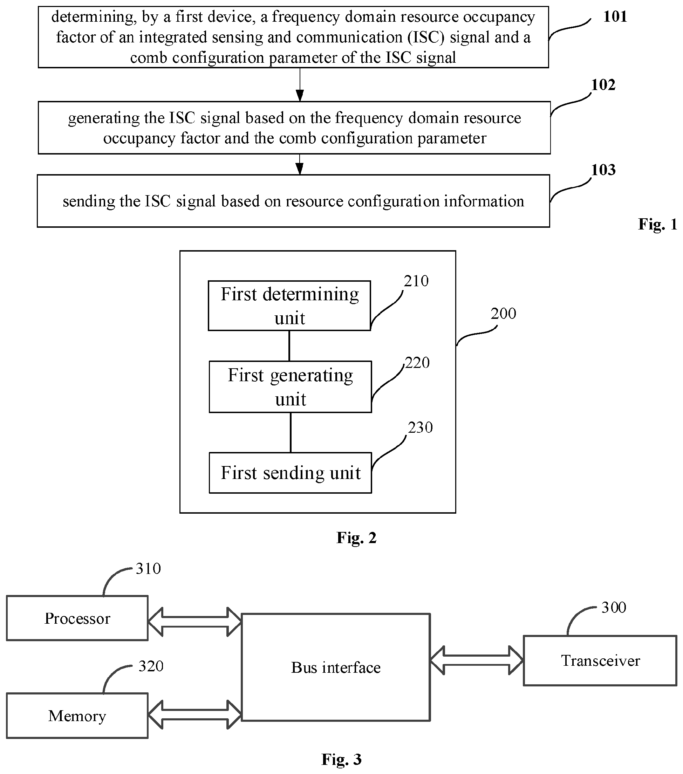

As shown in FIG. 1, an embodiment of this application provides a signal sending method applied to a first device, which specifically includes the following steps:
Step 101: the first device determines a frequency domain resource occupancy factor of an ISC signal and a comb configuration parameter of the ISC signal.

In this embodiment, the first device may be a terminal device or a network device (e.g., a base station). The first device may also be an Internet of Vehicles (IoV) device. The frequency domain resource occupancy factor is a parameter related to the sequence length of a Low Peak-to-Average Power Ratio (Low-PAPR) Type 1 (Type 1) sequence. Both the frequency domain resource occupancy factor and the comb configuration parameter of the ISC signal may be used to determine the length of the ISC signal.

Step 102: generating the ISC signal based on the frequency domain resource occupancy factor and the comb configuration parameter.

Step 103: sending the ISC signal based on the resource configuration information.

The first device generates the ISC signal based on the frequency domain resource occupancy factor and the comb configuration parameter, and sends the ISC signal. The resource configuration information may be generated by the first device itself, or generated by a second device and configured to the first device.

In this embodiment of the present application, the first device determines the frequency domain resource occupancy factor of the ISC signal and the comb configuration parameter of the ISC signal, generates and sends the ISC signal based on the frequency domain resource occupancy factor and the comb configuration parameter. In this embodiment, the first device may generate a corresponding ISC signal for different sensing capabilities and different sensing service nodes, and the generated OFDM-based sensing waveform has good compatibility with communication systems, high spectrum utilization efficiency, and higher sensing precision.

In some embodiments, the determining the frequency domain resource occupancy factor of the ISC signal includes: determining the frequency domain resource occupancy factor of the ISC signal according to a range resolution and/or a range accuracy; and/or
the determining the comb configuration parameter of the ISC signal includes: determining the comb configuration parameter of the ISC signal according to a maximum detection range.

In this embodiment, the range resolution refers to the capability of the sensing system to distinguish between two or more target objects in the same orientation but different distances, meaning the minimum distance difference between two objects that can be resolved within a certain distance range. The range accuracy is used to describe the accuracy of the sensing system in estimating the distance parameter of a single target object.

Different sensing services have different requirements for range resolution and/or range accuracy, and the first device may determine the frequency domain resource occupancy factor based on specific range resolution and/or range accuracy.

The maximum detection range is the maximum relative distance at which an obstacle can be detected. The first device may determine the comb configuration parameter of the ISC signal based on the maximum detection range.

In this embodiment, the first device determines the frequency domain resource occupancy factor based on the range resolution and/or range accuracy; determines the comb configuration parameter of the ISC signal according to the maximum detection range; and generates and sends the ISC signal based on the frequency domain resource occupancy factor and the comb configuration parameter. In this embodiment, based on the different requirements of different sensing services for range resolution and/or range accuracy, corresponding ISC signals may be generated for different sensing capabilities and different sensing service nodes, and the generated OFDM-based sensing waveform has good compatibility with communication systems, high spectrum utilization efficiency, and higher sensing precision.

In some embodiments, the determining the frequency domain resource occupancy factor of the ISC signal includes: in case that the target object is not recognized, determining the frequency domain resource occupancy factor of the ISC signal according to the range accuracy; and
in case that the target object is recognized, determining the frequency domain resource occupancy factor of the ISC signal according to the range resolution.

In this embodiment, the first device may determine the range accuracy and/or range resolution based on the resource configuration information. For example, the sensing process includes a coarse sensing process and a fine sensing process. In the coarse sensing process, the first device has not yet recognized the target object, and the frequency domain resource occupancy factor may be determined based on the range accuracy in the resource configuration information, and then the ISC signal is generated in combination with the comb configuration parameter. In the fine sensing process, the first device has recognized the target object, and then frequency domain resource occupancy factor is determined based on the range resolution in the resource configuration information, and then generates the ISC signal in combination with the comb configuration parameter. In this embodiment, for different scenarios of whether the target object is recognized, the ISC signal generated by the first device based on the range accuracy may be different from the ISC signal generated based on the range resolution.

In some embodiments, the range resolution includes a range resolution required by the sensing service or a range resolution supported by the sensing device;
and/or the range accuracy includes a range accuracy required by the sensing service or a range accuracy supported by the sensing device;
and/or the maximum detection range includes a maximum detection range required by the sensing service or a maximum detection range supported by the sensing device.

In this embodiment, the sensing device may include a terminal and/or a network device, that is, the range resolution, range accuracy, maximum detection range, etc., may depend on the capabilities of the sensing transmitter and/or the sensing receiver. The first device may determine the frequency domain resource occupancy factor based on the range resolution required by the sensing service or the range resolution supported by the terminal and/or the network device; the first device may determine the frequency domain resource occupancy factor based on the range accuracy required by the sensing service or the range accuracy supported by the terminal and/or the network device. The first device may determine the comb configuration parameter of the ISC signal based on the maximum detection range required by the sensing service or the maximum detection range supported by the terminal and/or the network device. Corresponding ISC signals are generated for different sensing capabilities and/or different sensing service requirements.

In an optional embodiment, the determining the frequency domain resource occupancy factor of the ISC signal according to the range resolution and/or the range accuracy includes:
determining a preset signal length according to the range resolution and/or the range accuracy, where the preset signal length is greater than or equal to the total number of subcarriers, the total number of subcarriers is determined based on the range resolution or the range accuracy, and the preset signal length satisfies *M'_{ZC}* = *p* · *2ⁿ* where *M'_{ZC}* is the preset signal length, *n* is the frequency domain resource occupancy factor, and *p* is a positive integer serving as a subcarrier adjustment factor;
determining the frequency domain resource occupancy factor based on the preset signal length.

In some embodiments, the total number of subcarriers is: $\frac{c}{2 ⋅ Δf ⋅ ΔR} or \frac{c}{4 ⋅ γ ⋅ Δf ⋅ Δd}$ where *γ* is an algorithm factor; *Δf* is the subcarrier spacing; *c* is the speed of light; *ΔR* is the range resolution; *Δd* is the range accuracy.

In this embodiment, the first device may design the ISC signal based on the different requirements of different sensing services for range resolution and/or range accuracy, or design the ISC signal based on the range resolution and/or range accuracy supported by the sensing device. A preset signal length *M'_{ZC}* is defined using a Low-PAPR Type 1 sequence, where *M'_{ZC}* satisfies *p* · 2*ⁿ,* and then: $M {′}_{ZC} = p ⋅ {2}^{n} \geq \frac{c}{2 ⋅ Δf ⋅ ΔR} or M {′}_{ZC} = p ⋅ {2}^{n} \geq \frac{c}{4 ⋅ γ ⋅ Δf ⋅ Δd}$ where *γ* is an algorithm factor, which may be an integer from 1 to 8; and *p* is a system subcarrier adjustment factor, which is a positive integer. In some embodiments, the value of *p* for the corresponding NR system may be 3, and the frequency domain resource occupancy factor is the minimum integer that meets the above formula.

In an optional embodiment, the value of the comb configuration parameter satisfies a spacing formula for the comb configuration and falls within a first range;
the spacing formula for the comb configuration is: ${N}_{comb} = {2}^{m} \leq \frac{c}{2 ⋅ {R}_{max} ⋅ Δf}$ where *N_{comb}* denotes the spacing of the comb configuration; *m* is the comb configuration parameter; *Δf* is the subcarrier spacing; *c* is the speed of light; and *Rₘₐₓ* is the maximum detection range.

In this embodiment, the first device determines the comb configuration parameter *m* of the ISC signal based on the maximum detection range, where the first range may be preconfigured or predefined. *m* is a non-negative integer that satisfies the foregoing formula and whose value falls within the first range. In some embodiments, *m* may be the smallest possible value that satisfies the foregoing formula, that is, the value of *m* should not be too large.

In some embodiments, in case that the number of subcarriers in one RB of the NR system is 12, the preferred set of *m* is {0, 1, 2}.

In an optional embodiment, the generating the ISC signal based on the frequency domain resource occupancy factor and the comb configuration parameter includes:
determining the length of the ISC signal according to the frequency domain resource occupancy factor and the comb configuration parameter;
generating the ISC signal of the corresponding length according to the length of the ISC signal; wherein the length of the ISC signal is: *M_{ZC}* = *p* · 2*^{n-m}*
where *M_{ZC}* is the length of the ISC signal, *n* is the frequency domain resource occupancy factor, *m* is the comb configuration parameter, and *p* is a positive integer serving as a subcarrier adjustment factor.

In this embodiment, the first device may determine the length *M_{ZC}* of the ISC signal based on the frequency domain resource occupancy factor and the comb configuration parameter: ${M}_{ZC} = \frac{M {′}_{ZC}}{{N}_{comb}} = p ⋅ {2}^{n - m}$

In an optional embodiment, the method further includes: generating the resource configuration information; or receiving the resource configuration information sent by the second device.

In this embodiment, the resource configuration information may be generated by the first device itself or sent by the second device to the first device. For example, if the first device is a terminal and the second device is a base station, the base station generates the resource configuration information and sends it to the terminal, and the terminal generates and sends the ISC signal based on the resource configuration information; or if the first device is a base station, the base station itself generates the resource configuration information and generates and sends the ISC signal based on the resource configuration information. The method for the first device to generate the resource configuration information is the same as the method for the second device to generate the resource configuration information. The second device may alternatively be a terminal, such as a terminal in a direct communication link or an Internet of Vehicles (IoV) device.

In case that the resource configuration information is configured by the second device, the second device may determine the resource configuration information of the signal based on the range resolution or range accuracy and the comb configuration parameter of the ISC signal. For the scenario where the sensing target is not recognized, the second device may determine the allocated sensing resources based on the range accuracy, the maximum detection range, and the comb configuration parameter to ensure the accuracy of parameter estimation during the process of recognizing the target object.

For the scenario where the sensing target is recognized, the second device determines the allocated sensing resources by using the range resolution, the maximum detection range, and the comb configuration parameter. The range resolution is the capability to distinguish two or more targets in the same orientation but different distances, which can affect the recognition probability and range estimation accuracy in multi-target scenarios. Therefore, for the scenario where the sensing target is recognized, allocating sensing resources based on the range resolution can ensure the multi-target recognition probability and target recognition range accuracy.

In some embodiments, the generating the resource configuration information includes: generating the resource configuration information according to the range resolution or the range accuracy and the comb configuration parameter.

This embodiment is for the case where the first device generates the resource configuration information itself. The first device may generate the resource configuration information based on the range resolution and the comb configuration parameter; or the first device may generate the resource configuration information based on the range accuracy and the comb configuration parameter.

In some embodiments, the resource configuration information includes first configuration information for the scenario where the target object is not recognized, and/or second configuration information for the scenario where the target object is recognized; the first configuration information is generated based on the range accuracy, the maximum detection range, and the comb configuration parameter; the second configuration information is generated based on the range resolution, the maximum detection range, and the comb configuration parameter.

In this embodiment, the first device may determine the resource configuration information of the signal based on the range resolution or range accuracy and the comb configuration parameter of the ISC signal. For the scenario where the sensing target is not recognized, the first device may determine the allocated sensing resources based on the range accuracy, the maximum detection range, and the comb configuration parameter to ensure the accuracy of parameter estimation during the process of recognizing the target object.

For the scenario where the sensing target is recognized, the first device determines the allocated sensing resources by using the range resolution, the maximum detection range, and the comb configuration parameter. The range resolution is the capability to distinguish two or more targets in the same orientation but different distances, which can affect the recognition probability and range estimation accuracy in multi-target scenarios. Therefore, for the scenario where the sensing target is recognized, allocating sensing resources based on the range resolution can ensure the multi-target recognition probability and target recognition range accuracy.

In some embodiments, the determining the resource configuration information allocated to the ISC signal according to the range resolution or the range accuracy and the comb configuration parameter includes:
determining a bandwidth occupied by frequency domain resources allocated for the ISC signal according to the range resolution or the range accuracy;
determining the number of subcarriers occupied by the frequency domain resources within the bandwidth based on the comb configuration parameter and the bandwidth;
wherein the resource configuration information includes the bandwidth and the number of subcarriers.

In some embodiments, the determining the bandwidth occupied by the frequency domain resources allocated for the ISC signal according to the range resolution or the range accuracy includes:
calculating a bandwidth occupied by the frequency domain resources allocated for the ISC signal by the following formula: ${B}_{1} = \frac{c}{4 ⋅ γ ⋅ Δd} or {B}_{2} = \frac{c}{2 ⋅ ΔR}$ where *B*₁ and *B*₂ are both the bandwidth occupied by the frequency domain resources allocated for the ISC signal; *γ* is the algorithm factor; *ΔR* is the range resolution; *Δd* is the range accuracy; *B*₁ is the bandwidth for the scenario where the target object is not recognized; and *B*₂ is the bandwidth for the scenario where the target object is recognized.

In this embodiment, in case that the target object is recognized, the first device may use the formula for *B*₂ to determine the bandwidth occupied by the frequency domain resources allocated to the ISC signal; in case that the target object is not recognized, the first device may use the formula for *B*₁ to determine the bandwidth occupied by the frequency domain resources allocated to the ISC signal.

Specifically, for the scenario where the target object is not recognized, the first device allocates a continuous or discontinuous frequency domain resource based on the range accuracy *Δd*, where the resource occupancy bandwidth *B*₁ is: ${B}_{1} = \frac{c}{4 ⋅ γ ⋅ Δd}$

In combination with the determined comb configuration parameter, the network device may determine the subcarriers occupied within the bandwidth *B*₁. The total number of subcarriers within the bandwidth *B*₁ is $\frac{{B}_{1}}{Δf}$, and the number of subcarriers occupied by the bandwidth *B*₁ is $\frac{{B}_{1}}{m ⋅ Δf}$, that is, the subcarrier comb configuration within *B*₁ occupies 1 subcarrier every *m* subcarriers with uniform distribution;
or, for the scenario where the target object is recognized, the first device allocates a continuous or discontinuous frequency domain resource based on the range resolution *ΔR*, and the resource occupancy bandwidth *B*₂ is: ${B}_{2} = \frac{c}{2 ⋅ ΔR}$

In combination with the determined comb configuration parameter, the network device may determine the subcarriers occupied within the bandwidth *B*₂. The total number of subcarriers within the bandwidth *B*₂ is $\frac{{B}_{2}}{Δf}$, and the number of subcarriers occupied by the bandwidth *B*₂ is $\frac{{B}_{2}}{m ⋅ Δf}$, that is, the subcarrier comb configuration within *B*₂ occupies 1 subcarrier every *m* subcarriers with uniform distribution.

In some embodiments, the determining the number of subcarriers occupied by the frequency domain resources within the bandwidth based on the comb configuration parameter and the bandwidth includes:
calculating the number of subcarriers occupied by the frequency domain resources within the bandwidth by the following formula: $M = \frac{B}{m ⋅ Δf}$ where *M* is the number of subcarriers occupied by the frequency domain resources within the bandwidth; *B* = *B*₁ or *B*₂; *B*₁ is the bandwidth for the scenario where the target object is not recognized; *B*₂ is the bandwidth for the scenario where the target object is recognized; *Δf* is the subcarrier spacing; and *m* is the comb configuration parameter.

In this embodiment, after generating the ISC signal, the first device sends the ISC signal based on the above resource configuration information.

In some embodiments, the resource configuration information includes first configuration information for the scenario where the target object is not recognized, and/or second configuration information for the scenario where the target object is recognized; the first configuration information is generated based on the range accuracy and the comb configuration parameter; the second configuration information is generated based on the range resolution and the comb configuration parameter.

In this embodiment, the network device may determine the resource configuration information of the signal based on the range resolution or range accuracy and the comb configuration parameter of the ISC signal. For the scenario where the sensing target is not recognized, the network device may determine the allocated sensing resources based on the range accuracy, the maximum detection range, and the comb configuration parameter to ensure the accuracy of parameter estimation during the process of recognizing the target object.

For the scenario where the sensing target is recognized, the network device determines the allocated sensing resources by using the range resolution, the maximum detection range, and the comb configuration parameter. The range resolution is the capability to distinguish two or more targets in the same orientation but different distances, which can affect the recognition probability and range estimation accuracy in multi-target scenarios. Therefore, for the scenario where the sensing target is recognized, allocating sensing resources based on the range resolution can ensure the multi-target recognition probability and target recognition range accuracy.

The following describes a method for generating the integrated sensing and communication signal and a resource configuration method with examples.

In an optional embodiment, for the scenario where the target object is not detected, the first device is a terminal and the second device is a network device, that is, the network device generates the resource configuration information and sends it to the terminal, and the terminal generates and sends the ISC signal.

For the scenario where the target object is not detected, the network device determines the allocated sensing resources based on the range accuracy requirement and the maximum detection range requirement of the sensing service, and the terminal generates the ISC signal.

Step 21: the network device allocates a continuous or discontinuous frequency domain resource based on the range accuracy *Δd* requirement of the sensing service, where the resource occupancy bandwidth is ${B}_{1} = \frac{c}{4 ⋅ γ ⋅ Δd}$. Here, *γ* is an algorithm factor, usually an integer from 1 to 8; in the initial search stage, the accuracy requirement may also be relaxed, and *γ* may be an integer greater than 8. A larger *γ* means smaller resource occupancy.

Step 22: the network device determines the comb configuration parameter *m* of the ISC signal based on the maximum detection range requirement of the sensing service. The value of *m* should not be too large, and *m* is a non-negative integer that satisfies the following formula and is as small as possible. For example, if the number of subcarriers in one RB of the current NR system is 12, the preferred set of m is {0, 1, 2}: ${N}_{comb} = {2}^{m} \leq \frac{c}{2 ⋅ {R}_{max} ⋅ Δf}$

Based on the maximum detection range requirement of the sensing service and the determined *m*, the subcarriers occupied within the bandwidth *B*₁ are determined. The total number of subcarriers within the bandwidth *B*₁ is $\frac{{B}_{1}}{Δf}$, and the number of occupied subcarriers is $\frac{{B}_{1}}{m ⋅ Δf}$, that is, the subcarrier comb configuration within *B*₁ occupies 1 subcarrier every m subcarriers with uniform distribution.

The network device sends the resource configuration information such as the bandwidth and the number of subcarriers occupied by the frequency domain resources within the bandwidth to the terminal.

Step 23: the terminal determines the frequency domain resource occupancy factor *n* based on the range accuracy.
According to *B*₁, the following sensing signal is designed. The sensing signal adopts a Low-PAPR Type 1 sequence, and a preset signal length *M'_{ZC}* is defined. *M'_{ZC}* satisfies *p* · 2*ⁿ*, and *n* is the minimum integer that satisfies the following formula: $M {′}_{ZC} = p ⋅ {2}^{n} \geq \frac{{B}_{1}}{Δf}$ where *p* is a system subcarrier adjustment factor, a positive integer, and *p* may be 3 for the corresponding NR system.

Step 24: determining the length of the ISC signal according to *m* and *n.*
Further, the length *M_{ZC}* of the ISC signal may be determined as: ${M}_{ZC} = \frac{M {′}_{ZC}}{{N}_{comb}} = p ⋅ {2}^{n - m}$ The terminal generates the ISC signal based on the signal length and sends the signal.

In another optional embodiment, for the scenario where the target object is detected, the first device is a terminal and the second device is a network device, that is, the network device generates the resource configuration information and sends it to the terminal, and the terminal generates and sends the ISC signal.

In case that the target object is detected, the presence direction of the target object is further sensed. The network device determines the allocated sensing resources through the range resolution and maximum detection range requirements of the sensing service. The terminal generates the ISC signal for scanning to ensure the multi-target object recognition probability and target recognition range accuracy.

Step 31: the network device first determines whether a target object exists. The determination method is, for example, if the range detection peak is greater than a preset threshold, that the target object is recognized is determined.

Step 32: a continuous or discontinuous frequency domain resource is allocated based on the range resolution *ΔR* requirement of the sensing service, where the resource occupancy bandwidth is ${B}_{2} = \frac{c}{2 ⋅ ΔR}$.

Step 33: the comb configuration parameter m of the ISC signal is determined according to the maximum detection range. *m* is a non-negative integer that satisfies the following formula and is as small as possible. According to the number of subcarriers in one RB of the NR system being 12, the preferred set of m is {0, 1, 2}: ${N}_{comb} = {2}^{m} \leq \frac{c}{2 ⋅ {R}_{max} ⋅ Δf}$

Based on the maximum detection range requirement of the sensing service and the determined *m*, the subcarriers occupied within the bandwidth *B*₂ are determined. The total number of subcarriers within the bandwidth *B*₂ is $\frac{{B}_{2}}{Δf}$, and the number of occupied subcarriers is $\frac{{B}_{2}}{m ⋅ Δf}$, that is, the subcarrier comb configuration within *B*₂ occupies 1 subcarrier every m subcarriers with uniform distribution.

The network device sends the resource configuration information such as the bandwidth and the number of subcarriers occupied by the frequency domain resources within the bandwidth to the terminal.

Step 34: the terminal determines the frequency domain resource occupancy factor *n* based on the range resolution.

According to *B*₂, the following sensing signal is designed. The sensing signal adopts a Low-PAPR Type 1 sequence, and a length *M'_{ZC}* is defined. *M'_{ZC}* = *p* · 2*ⁿ,* and *n* is the minimum integer that satisfies the following formula: $M {′}_{ZC} = p ⋅ {2}^{n} \geq \frac{{B}_{2}}{Δf}$ where *p* is a system subcarrier adjustment factor, a positive integer, and *p* may be 3 for the corresponding NR system.

Step 35: the terminal determines the length of the ISC signal based on *m* and *n.* Further, the length *M_{ZC}* of the ISC signal may be determined as: ${M}_{ZC} = \frac{M {′}_{ZC}}{{N}_{comb}} = p ⋅ {2}^{n - m}$ The terminal generates the ISC signal based on the signal length and sends the signal.

In another optional embodiment, for the scenario where the target object is not detected, the first device is a terminal and the second device is a network device, that is, the network device generates the resource configuration information and sends it to the terminal, and the terminal generates and sends the ISC signal.

For the scenario where the target object is not detected, the network device determines the allocated sensing resources based on the range accuracy supported by the terminal and the maximum detection range supported by the terminal, and the terminal generates the ISC signal.

Step 41: the network device allocates a continuous or discontinuous frequency domain resource based on the range accuracy *Δd* supported by the network device and/or the terminal, where the resource occupancy bandwidth is ${B}_{1} = \frac{c}{4 ⋅ γ ⋅ Δd}$. Here, *γ* is an algorithm factor, usually an integer from 1 to 8; in the initial search stage, the accuracy requirement may also be relaxed, and *γ* may be an integer greater than 8. A larger *γ* means smaller resource occupancy.

Step 42: the network device determines the comb configuration parameter *m* of the ISC signal based on the maximum detection range supported by the network device and/or the terminal. The value of *m* should not be too large, and *m* is a non-negative integer that satisfies the following formula and is as small as possible. For example, if the number of subcarriers in one RB of the current NR system is 12, the preferred set of m is {0, 1, 2}: ${N}_{comb} = {2}^{m} \leq \frac{c}{2 ⋅ {R}_{max} ⋅ Δf}$ Based on the maximum detection range supported by the network device and/or the terminal and the determined *m*, the subcarriers occupied within the bandwidth *B*₁ are determined. The total number of subcarriers within the bandwidth *B*₁ is $\frac{{B}_{1}}{Δf}$, and the number of occupied subcarriers is $\frac{{B}_{1}}{m ⋅ Δf}$, that is, the subcarrier comb configuration within *B*₁ occupies 1 subcarrier every m subcarriers with uniform distribution.

The network device sends the resource configuration information such as the bandwidth and the number of subcarriers occupied by the frequency domain resources within the bandwidth to the terminal.

Step 43: the terminal determines the frequency domain resource occupancy factor *n* based on the range accuracy supported by the terminal.
According to *B*₁, the following sensing signal is designed. The sensing signal adopts a Low-PAPR Type 1 sequence, and a preset signal length *M'_{ZC}* is defined. *M'_{ZC}* satisfies *p* · 2*ⁿ,* and *n* is the minimum integer that satisfies the following formula: $M {′}_{ZC} = p ⋅ {2}^{n} \geq \frac{{B}_{1}}{Δf}$ where *p* is a system subcarrier adjustment factor, a positive integer, and *p* may be 3 for the corresponding NR system.

Step 44: the length of the ISC signal is determined according to *m* and *n.*
Further, the length *M_{ZC}* of the ISC signal may be determined as: ${M}_{ZC} = \frac{M {′}_{ZC}}{{N}_{comb}} = p ⋅ {2}^{n - m}$ The terminal generates the ISC signal based on the signal length and transmits the signal.

In another optional embodiment, for the scenario where the target object is detected, the first device is a terminal and the second device is a network device, that is, the network device generates the resource configuration information and sends it to the terminal, and the terminal generates and transmits the ISC signal.

In case that the target object is detected, the presence direction of the target object is further sensed. The network device determines the allocated sensing resources by using the range resolution supported by the terminal and the maximum detection range supported by the terminal. The terminal generates the ISC signal for scanning to ensure the multi-target object recognition probability and target recognition range accuracy.

Step 51: the network device first determines whether a target object exists. The determination method is, for example, if the range detection peak is greater than a certain preset threshold, recognizing the target object is determined.

Step 52: a continuous or discontinuous frequency domain resource is allocated based on the range resolution *ΔR* supported by the network device and/or the terminal, where the resource occupancy bandwidth is ${B}_{2} = \frac{c}{2 ⋅ ΔR}$.

Step 53: the comb configuration parameter *m* of the ISC signal is determined according to the maximum detection range supported by the network device and/or the terminal. *m* is a non-negative integer that satisfies the following formula and is as small as possible. According to the number of subcarriers in one RB of the NR system being 12, the preferred set of *m* is {0, 1, 2}: ${N}_{comb} = {2}^{m} \leq \frac{c}{2 ⋅ {R}_{max} ⋅ Δf}$

Based on the maximum detection range supported by the network device and/or the terminal and the determined *m*, the subcarriers occupied within the bandwidth *B*₂ are determined. The total number of subcarriers within the bandwidth *B*₂ is $\frac{{B}_{2}}{Δf}$, and the number of occupied subcarriers is $\frac{{B}_{2}}{m ⋅ Δf}$, that is, the subcarrier comb configuration within *B*₂ occupies 1 subcarrier every *m* subcarriers with uniform distribution.

The network device sends the resource configuration information such as the bandwidth and the number of subcarriers occupied by the frequency domain resources within the bandwidth to the terminal.

Step 54: the terminal determines the frequency domain resource occupancy factor *n* based on the range resolution supported by the network device and/or the terminal.

According to *B*₂, the following sensing signal is designed. The sensing signal adopts a Low-PAPR Type 1 sequence, and a length *M'_{ZC}* is defined. *M'_{ZC}* = *p ·* 2*ⁿ,* and *n* is the minimum integer that satisfies the following formula: $M {′}_{ZC} = p ⋅ {2}^{n} \geq \frac{{B}_{2}}{Δf}$ where *p* is a system subcarrier adjustment factor, a positive integer, and *p* may be 3 for the corresponding NR system.

Step 55: the terminal determines the length of the ISC signal based on *m* and *n.*

In the embodiments of the present application, by leveraging the advantage of good compatibility between OFDM-based sensing waveforms and communication systems, an OFDM-based ISC signal design method and resource allocation scheme are provided. For different sensing capabilities, nodes oriented to different sensing services, and different sensing stages, the scheme adopts corresponding sensing signal resource allocation manners, which has the advantages of simple signal resource configuration, high spectrum utilization efficiency, and high sensing accuracy.

The foregoing embodiments describe the signal resource configuration and sending method of the present application. The following embodiments further describe the corresponding apparatus with reference to the accompanying drawings.
Specifically, as shown in FIG. 2, an embodiment of the present application provides a signal sending apparatus 200 applied to a first device, where the device may be a terminal or a network device, and the apparatus includes:
a first determining unit 210, configured to determine a frequency domain resource occupancy factor of an integrated sensing and communication (ISC) signal and a comb configuration parameter of the ISC signal;
a first generating unit 220, configured to generate the ISC signal based on the frequency domain resource occupancy factor and the comb configuration parameter;
a first sending unit 230, configured to send the ISC signal based on resource configuration information.

In some embodiments, the first determining unit is specifically configured to:
determine the frequency domain resource occupancy factor of the ISC signal according to a range resolution and/or a range accuracy; and/or
determine the comb configuration parameter of the ISC signal according to a maximum detection range.

In some embodiments, the first determining unit is specifically configured to:
determine the frequency domain resource occupancy factor of the ISC signal according to the range accuracy in case that a target object is not recognized;
determine the frequency domain resource occupancy factor of the ISC signal according to the range resolution in case that the target object is recognized.

In some embodiments, the range resolution includes a range resolution required by a sensing service or a range resolution supported by a sensing device;
and/or the range accuracy includes a range accuracy required by the sensing service or a range accuracy supported by the sensing device;
and/or the maximum detection range includes a maximum detection range required by the sensing service or a maximum detection range supported by the sensing device.

In some embodiments, the first determining unit is specifically configured to:
determine a preset signal length according to the range resolution and/or the range accuracy, where the preset signal length is greater than or equal to a total number of subcarriers, the total number of subcarriers is determined based on the range resolution or the range accuracy, and the preset signal length satisfies *M'_{ZC}* = *p* · 2*ⁿ* , where *M'_{ZC}* is the preset signal length, *n* is the frequency domain resource occupancy factor, and *p* is a positive integer serving as a subcarrier adjustment factor;
determine the frequency domain resource occupancy factor based on the preset signal length.

In some embodiments, the total number of subcarriers is $\frac{c}{2 Δf ⋅ ΔR}$ or $\frac{c}{4 γ ⋅ Δf ⋅ Δd}$*,* where *γ* is an algorithm factor, *Δf* is a subcarrier spacing, *c* is the speed of light, *ΔR* is the range resolution, and *Δd* is the range accuracy.

In some embodiments, a value of the comb configuration parameter satisfies a spacing formula for the comb configuration and falls within a first range; the spacing formula for the comb configuration is ${N}_{comb} = {2}^{m} \leq \frac{c}{2 {R}_{max} ⋅ Δf}$, where *N_{comb}* denotes a spacing of the comb configuration, *m* is the comb configuration parameter, *Δf* is the subcarrier spacing, *c* is the speed of light, and *Rₘₐₓ* is the maximum detection range.

In some embodiments, the first generating unit is specifically configured to:
determine the length of the ISC signal according to the frequency domain resource occupancy factor and the comb configuration parameter;
generate the ISC signal of the corresponding length according to the length of the ISC signal;
wherein the length of the ISC signal is *M_{ZC}* = *p ·* 2*^{n-m}* , where *M_{ZC}* is the length of the ISC signal, *n* is the frequency domain resource occupancy factor, m is the comb configuration parameter, and *p* is a positive integer serving as a subcarrier adjustment factor.

In some embodiments, the apparatus further includes: a second generating unit, configured to generate the resource configuration information; or a first receiving unit, configured to receive the resource configuration information sent by a second device.

In some embodiments, the second generating unit is specifically configured to generate the resource configuration information according to the range resolution or the range accuracy and the comb configuration parameter.

In some embodiments, the second generating unit is specifically configured to: determine a bandwidth occupied by frequency domain resources allocated for the ISC signal according to the range resolution or the range accuracy; determine the number of subcarriers occupied by the frequency domain resources within the bandwidth based on the comb configuration parameter and the bandwidth; wherein the resource configuration information includes the bandwidth and the number of subcarriers.

In some embodiments, the bandwidth occupied by the frequency domain resources allocated for the ISC signal is calculated by ${B}_{1} = \frac{c}{4 γ ⋅ Δd}$ or ${B}_{2} = \frac{c}{2 ΔR}$, where *B*₁, *B*₂ are both bandwidths occupied by the frequency domain resources allocated for the ISC signal, *B*₁ is the bandwidth for a case where the target object is not recognized, *B*₂ is the bandwidth for a case where the target object is recognized, *γ* is the algorithm factor, *ΔR* is the range resolution, *Δd* is the range accuracy.

In some embodiments, determining the number of subcarriers occupied by the frequency domain resources within the bandwidth according to the comb configuration parameter and the bandwidth, includes: calculating the number of subcarriers occupied by the frequency domain resources within the bandwidth by the following formula: $M = \frac{B}{m ⋅ Δf}$, where *M* is the number of subcarriers occupied by the frequency domain resources within the bandwidth, *B* = *B*₁ or *B*₂, *B*₁ is the bandwidth for a case where the target object is not recognized, *B*₂ is the bandwidth for a case where the target object is recognized, *m* is the comb configuration parameter, and *Δf* is the subcarrier spacing.

In some embodiments, the resource configuration information includes first configuration information for the scenario where the target object is not recognized, and/or second configuration information for the scenario where the target object is recognized; the first configuration information is generated based on the range accuracy and the comb configuration parameter; the second configuration information is generated based on the range resolution and the comb configuration parameter.

It should be noted that the above apparatus provided in this embodiment of the present application can implement all the method steps implemented in the method embodiment applied to the first device, and can achieve the same technical effect. Details and beneficial effects that are the same as those in the method embodiment are not described in detail herein.

It should be noted that the division of units in the embodiments of the present application is schematic and merely a logical function division. There may be another division manner during actual implementation. In addition, functional units in the embodiments of the present application may be integrated into one processing unit, or each unit may exist independently physically, or two or more units may be integrated into one unit. The integrated unit may be implemented in the form of hardware or a software functional unit.

As shown in FIG. 3, an embodiment of the present application further provides a device, including a memory 320, a transceiver 300, and a processor 310. The memory 320 is configured to store a computer program; the transceiver 300 is configured to receive and send data under the control of the processor 310; the processor 310 is configured to read the computer program in the memory and perform the following operations:
determining a frequency domain resource occupancy factor of an integrated sensing and communication (ISC) signal and a comb configuration parameter of the ISC signal;
generating the ISC signal based on the frequency domain resource occupancy factor and the comb configuration parameter;
sending the ISC signal based on resource configuration information.

In some embodiments, the processor is configured to read the computer program in the memory and perform the following operations:
determining the frequency domain resource occupancy factor of the ISC signal according to a range resolution and/or a range accuracy; and/or
determining the comb configuration parameter of the ISC signal according to a maximum detection range.

In some embodiments, the processor is configured to read the computer program in the memory and perform the following operations:
determining the frequency domain resource occupancy factor of the ISC signal according to the range accuracy in case that a target object is not recognized;
determining the frequency domain resource occupancy factor of the ISC signal according to the range resolution in case that the target object is recognized.

In some embodiments, the range resolution includes a range resolution required by a sensing service or a range resolution supported by a sensing device; and/or the range accuracy includes a range accuracy required by the sensing service or a range accuracy supported by the sensing device; and/or the maximum detection range includes a maximum detection range required by the sensing service or a maximum detection range supported by the sensing device.

In some embodiments, the processor is configured to read the computer program in the memory and perform the following operations:
determining a preset signal length according to the range resolution and/or the range accuracy, where the preset signal length is greater than or equal to a total number of subcarriers, the total number of subcarriers is determined based on the range resolution or the range accuracy, and the preset signal length satisfies *M'_{ZC}* = *p* · 2*ⁿ,* where *M'_{ZC}* is the preset signal length, *n* is the frequency domain resource occupancy factor, and *p* is a positive integer serving as a subcarrier adjustment factor;
determining the frequency domain resource occupancy factor based on the preset signal length.

In some embodiments, the total number of subcarriers is $\frac{c}{2 Δf ⋅ ΔR}$ or $\frac{c}{4 γ ⋅ Δf ⋅ Δd}$*,* where *γ* is an algorithm factor, *Δf* is a subcarrier spacing, *c* is the speed of light, *ΔR* is the range resolution, and *Δd* is the range accuracy.

In some embodiments, a value of the comb configuration parameter satisfies a spacing formula for the comb configuration and falls within a first range; the spacing formula for the comb configuration is ${N}_{comb} = {2}^{m} \leq \frac{c}{2 {R}_{max} ⋅ Δf}$, where *N_{comb}* denotes a spacing of the comb configuration, *m* is the comb configuration parameter, *Δf* is the subcarrier spacing, *c* is the speed of light, and *Rₘₐₓ* is the maximum detection range.

In some embodiments, the processor is configured to read the computer program in the memory and perform the following operations:
determining the length of the ISC signal according to the frequency domain resource occupancy factor and the comb configuration parameter;
generating the ISC signal of the corresponding length according to the length of the ISC signal;
wherein the length of the ISC signal is *M_{ZC}* = *p* · 2*^{n-m}* , where *M_{ZC}* is the length of the ISC signal, *n* is the frequency domain resource occupancy factor, *m* is the comb configuration parameter, and *p* is a positive integer serving as a subcarrier adjustment factor.

In some embodiments, the processor is configured to read the computer program in the memory and perform the following operations:
generating the resource configuration information; or receiving the resource configuration information sent by a second device.

In some embodiments, the processor is configured to read the computer program in the memory and perform the following operations:
generating the resource configuration information according to the range resolution or the range accuracy and the comb configuration parameter.

In some embodiments, the processor is configured to read the computer program in the memory and perform the following operations:
determining a bandwidth occupied by frequency domain resources allocated for the ISC signal according to the range resolution or the range accuracy;
determining the number of subcarriers occupied by the frequency domain resources within the bandwidth based on the comb configuration parameter and the bandwidth;
wherein the resource configuration information includes the bandwidth and the number of subcarriers.

In some embodiments, the processor is configured to read the computer program in the memory and perform the following operations:
calculating the bandwidth occupied by the frequency domain resources allocated for the ISC signal by the following formula: ${B}_{1} = \frac{c}{4 γ ⋅ Δd}$ or ${B}_{2} = \frac{c}{2 ΔR}$, where both *B*₁ and *B*₂ are bandwidth occupied by the frequency domain resources allocated for the ISC signal, *B*₁ is the bandwidth for a case where the target object is not recognized, *B*₂ is the bandwidth for a case where the target object is recognized, *γ* is the algorithm factor, *ΔR* is the range resolution, *Δd* is the range accuracy, and *c* is the speed of light.

In some embodiments, the processor is configured to read the computer program in the memory and perform the following operations:
calculating the number of subcarriers occupied by the frequency domain resources within the bandwidth by the following formula: $M = \frac{B}{m ⋅ Δf}$, where *M* is the number of subcarriers occupied by the frequency domain resources in the bandwidth; *B* = *B*₁ or *B*₂, *B*₁ is the bandwidth for a case where the target object is not recognized, *B*₂ is the bandwidth for a case where the target object is recognize; *m* is the comb configuration parameter, and *Δf* is the subcarrier spacing.

In some embodiments, the resource configuration information includes first configuration information for the scenario where the target object is not recognized, and/or second configuration information for the scenario where the target object is recognized; the first configuration information is generated based on the range accuracy and the comb configuration parameter; the second configuration information is generated based on the range resolution and the comb configuration parameter.

In FIG. 3, the bus architecture may include any number of interconnected buses and bridges. Specifically, the one or more processors represented by the processor 310 and various circuits of the memory represented by the memory 320 are linked together. The bus architecture may also link various other circuits such as peripheral devices, voltage regulators, and power management circuits, which are well known in the art and therefore will not be further described herein. The bus interface provides an interface. The transceiver 300 may be a plurality of elements, i.e., including a transmitter and a receiver, providing units for communicating with various other devices over a transmission medium. The processor 310 is responsible for managing the bus architecture and general processing, and the memory 320 may store data used by the processor 310 when performing operations.

The processor 310 may be a central processing unit (CPU), an application-specific integrated circuit (ASIC), a field-programmable gate array (FPGA), or a complex programmable logic device (CPLD), and the processor may also adopt a multi-core architecture.

It should be noted that the above device provided in this embodiment of the present application can implement all the method steps implemented by the method embodiment applied to the first device, and can achieve the same technical effect, which will not be described in detail in this embodiment.

In addition, embodiments of the present application further provide a processor-readable storage medium storing a computer program, where when the program is executed by a processor, the steps of the foregoing signal sending method are implemented, and the same technical effect can be achieved. To avoid repetition, details are not described herein again. The readable storage medium may be any available medium or data storage device that can be accessed by a processor, including but not limited to a magnetic memory (e.g., a floppy disk, a hard disk, a magnetic tape, a magneto-optical disk (MO), etc.), an optical memory (e.g., a compact disc (CD), a digital versatile disc (DVD), a Blu-ray Disc (BD), a high-definition versatile disc (HVD), etc.), and a semiconductor memory (e.g., a read-only memory (ROM), an erasable programmable read-only memory (EPROM), an electrically erasable programmable read-only memory (EEPROM), a non-volatile memory (NAND FLASH), a solid state drive (SSD), etc.).

It should be noted that the technical solutions provided in the embodiments of the present application may be applied to a variety of systems, especially a 5th generation mobile communication technology (5G) system. For example, the applicable system may be a global system for mobile communications (GSM) system, a code division multiple access (CDMA) system, a wideband code division multiple access (WCDMA) general packet radio service (GPRS) system, a long term evolution (LTE) system, an LTE frequency division duplex (FDD) system, an LTE time division duplex (TDD) system, a long term evolution advanced (LTE-A) system, a universal mobile telecommunications system (UMTS), a worldwide interoperability for microwave access (WiMAX) system, a 5G new radio (NR) system, etc. Each of the multiple systems includes a terminal device and a network device. The system may further include a core network part, such as an evolved packet system (EPS), a 5G system (5GS), or the like.

The terminal device in this embodiment of the present application may be a device that provides voice and/or data connectivity to a user, a handheld device with a wireless connection function, or another processing device connected to a wireless modem. In different systems, the name of the terminal device may also be different. For example, in a 5G system, the terminal device may be referred to as user equipment (UE). The wireless terminal device may communicate with one or more core networks (CN) through a radio access network (RAN), and the wireless terminal device may be a mobile terminal device, such as a mobile phone (or referred to as a "cellular" phone) and a computer with a mobile terminal device. For example, it may be a portable, pocket-sized, handheld, computer-built-in, or vehicle-mounted mobile device that exchanges language and/or data with the radio access network. Examples include a personal communication service (PCS) phone, a cordless phone, a session initiation protocol (SIP) phone, a wireless local loop (WLL) station, or a personal digital assistant (PDA). The wireless terminal device may also be referred to as a system, a subscriber unit, a subscriber station, a mobile station, a mobile, a remote station, an access point, a remote terminal, an access terminal, a user terminal, a user agent, or a user device, which is not limited in the embodiments of the present application.

The network device in this embodiment of the present application may be a base station, and the base station may include a plurality of cells serving terminals. According to different specific application scenarios, the base station may also be referred to as an access point, or a device in an access network that communicates with a wireless terminal device through one or more sectors on an air interface, or another name. The network device may be configured to exchange received over-the-air frames with Internet Protocol (IP) packets as a router between the wireless terminal device and the rest of the access network, where the rest of the access network may include an Internet Protocol (IP) communication network. The network device may also coordinate attribute management of the air interface. For example, the network device in this embodiment of the present application may be a base transceiver station (BTS) in a global system for mobile communications (GSM) or a code division multiple access (CDMA), a network device (NodeB) in a wideband code division multiple access (WCDMA), an evolved network device (evolutional Node B, eNB, or e-NodeB) in a long term evolution (LTE) system, a 5G base station (gNB) in a next generation system, a home evolved NodeB (HeNB), a relay node, a home base station (femto), a pico base station, etc., which is not limited in this embodiment of the present application. In some network structures, the network device may include a central unit (CU) node and a distributed unit (DU) node, and the centralized unit and the distributed unit may also be geographically separated.

The network device and the terminal device may each use one or more antennas to perform multi-input multi-output (MIMO) transmission, and the MIMO transmission may be single-user MIMO (SU-MIMO) or multi-user MIMO (MU-MIMO). The MIMO transmission may be two-dimensional MIMO (2D-MIMO), three-dimensional MIMO (3D-MIMO), full-dimension MIMO (FD-MIMO), or massive-MIMO (massive-MIMO), or may be diversity transmission, precoding transmission, or beamforming transmission.

A person skilled in the art should understand that the embodiments of the present application may be provided as a method, a system, or a computer program product. Therefore, the present disclosure may take the form of an entire hardware embodiment, an entire software embodiment, or an embodiment combining software and hardware aspects. Moreover, the present application may take the form of a computer program product implemented on one or more computer-usable storage media (including but not limited to disk memories and optical memories) containing computer-usable program code.

The present application is described with reference to flowcharts and/or block diagrams of the method, device (system), and computer program product according to the embodiments of the present application. It should be understood that each flow and/or block in the flowcharts and/or block diagrams, and combinations of flows and/or blocks in the flowcharts and/or block diagrams, may be implemented by computer-executable instructions. These computer-executable instructions may be provided to a processor of a general-purpose computer, a special-purpose computer, an embedded processor, or other programmable data processing devices to generate a machine, such that the instructions executed by the processor of the computer or other programmable data processing devices generate an apparatus for implementing the functions specified in one or more flows in the flowcharts and/or one or more blocks in the block diagrams.

These processor-executable instructions may also be stored in a processor-readable memory that can direct a computer or other programmable data processing apparatus to function in a specific manner, such that the instructions stored in the processor-readable memory generate an article of manufacture including an instruction apparatus that implements the functions specified in one or more flows of the flowchart and/or one or more blocks of the block diagram.

These processor-executable instructions may also be loaded onto a computer or other programmable data processing apparatus to cause a series of operational steps to be performed on the computer or other programmable apparatus to produce a computer-implemented process, such that the instructions executed on the computer or other programmable apparatus provide steps for implementing the functions specified in one or more flows of the flowchart and/or one or more blocks of the block diagram.

The terms "first" and "second" in the specification and claims of the present application are used to distinguish similar objects and are not necessarily used to describe a specific order or sequence. It should be understood that the terms used in this way may be interchanged under appropriate circumstances, so that the embodiments of the present disclosure described herein can be implemented in an order other than those illustrated or described herein. In addition, the terms "include" and "have" and any variations thereof are intended to cover non-exclusive inclusion. For example, a process, method, system, product, or device that includes a series of steps or units is not necessarily limited to the clearly listed steps or units, but may include other steps or units not clearly listed or inherent to these processes, methods, products, or devices. In addition, the use of "and/or" in the specification and claims indicates at least one of the connected objects. For example, A and/or B and/or C indicates seven cases including A alone, B alone, C alone, both A and B, both B and C, both A and C, and both A, B, and C. Similarly, the use of "at least one of A and B" in this specification and claims should be understood as "A alone, B alone, or both A and B".

Obviously, those skilled in the art can make various modifications and variations to the present application without departing from the spirit and scope of the present application. In this way, if these modifications and variations of the present application fall within the scope of the claims of the present application and their equivalent technologies, the present application is also intended to include these modifications and variations.

## Claims

1. A signal sending method, comprising:
determining, by a first device, a frequency domain resource occupancy factor of an integrated sensing and communication (ISC) signal and a comb configuration parameter of the ISC signal;
generating the ISC signal based on the frequency domain resource occupancy factor and the comb configuration parameter; and
sending the ISC signal based on resource configuration information.

2. The method according to claim 1, wherein,
the determining the frequency domain resource occupancy factor of the ISC signal comprises: determining the frequency domain resource occupancy factor of the ISC signal according to a range resolution and/or a range accuracy;
and/or
the determining the comb configuration parameter of the ISC signal comprises: determining the comb configuration parameter of the ISC signal according to a maximum detection range.

3. The method according to claim 1 or 2, wherein the determining the frequency domain resource occupancy factor of the ISC signal comprises:
determining the frequency domain resource occupancy factor of the ISC signal according to the range accuracy in case that a target object is not recognized;
determining the frequency domain resource occupancy factor of the ISC signal according to the range resolution in case that the target object is recognized.

4. The method according to claim 2, wherein,
the range resolution comprises a range resolution required by a sensing service or a range resolution supported by a sensing device;
and/or
the range accuracy comprises a range accuracy required by the sensing service or a range accuracy supported by the sensing device;
and/or
the maximum detection range comprises a maximum detection range required by the sensing service or a maximum detection range supported by the sensing device.

5. The method according to claim 2, wherein the determining the frequency domain resource occupancy factor of the ISC signal according to the range resolution and/or the range accuracy comprises:
determining a preset signal length according to the range resolution and/or the range accuracy, wherein the preset signal length is greater than or equal to a total quantity of subcarriers, the total quantity of subcarriers is determined based on the range resolution or the range accuracy, and the preset signal length satisfies *M'_{ZC}* = *p* · 2*ⁿ* , wherein *M'_{ZC}* is the preset signal length, *n* is the frequency domain resource occupancy factor, and *p* is a subcarrier adjustment factor and is a positive integer;
determining the frequency domain resource occupancy factor based on the preset signal length.

6. The method according to claim 5, wherein the total quantity of subcarriers is $\frac{c}{2 Δf ⋅ ΔR}$ or $\frac{c}{4 γ ⋅ Δf ⋅ Δd}$, where *γ* is an algorithm factor, *Δf* is a subcarrier spacing, *c* is the speed of light, *ΔR* is the range resolution, and *Δd* is the range accuracy.

7. The method according to claim 2, wherein a value of the comb configuration parameter satisfies a spacing formula for a comb configuration and falls within a first range;
the spacing formula for the comb configuration is ${N}_{comb} = {2}^{m} \leq \frac{c}{2 {R}_{max} ⋅ Δf}$, wherein *N_{comb}* denotes a spacing of the comb configuration, *m* is the comb configuration parameter, *Δf* is the subcarrier spacing, *c* is the speed of light, and *Rₘₐₓ* is the maximum detection range.

8. The method according to claim 1, wherein the generating the ISC signal based on the frequency domain resource occupancy factor and the comb configuration parameter comprises:
determining a length of the ISC signal according to the frequency domain resource occupancy factor and the comb configuration parameter;
generating the ISC signal of a corresponding length according to the length of the ISC signal;
wherein the length of the ISC signal is ${M}_{ZC} = p ⋅ {2}^{n - m}$, wherein *M_{ZC}* is the length of the ISC signal, *n* is the frequency domain resource occupancy factor, *m* is the comb configuration parameter, and *p* is a subcarrier adjustment factor and is a positive integer.

9. The method according to claim 1, further comprising:
generating the resource configuration information; or
receiving the resource configuration information sent by a second device.

10. The method according to claim 9, wherein the generating the resource configuration information comprises:
generating the resource configuration information according to the range resolution or the range accuracy and the comb configuration parameter.

11. The method according to claim 10, wherein the determining the resource configuration information allocated to the ISC signal according to the range resolution or the range accuracy and the comb configuration parameter comprises:
determining a bandwidth occupied by frequency domain resources allocated for the ISC signal according to the range resolution or the range accuracy;
determining a quantity of subcarriers occupied by the frequency domain resources within the bandwidth based on the comb configuration parameter and the bandwidth;
wherein the resource configuration information comprises the bandwidth and the quantity of subcarriers.

12. The method according to claim 11, wherein the determining the bandwidth occupied by the frequency domain resources allocated for the ISC signal according to the range resolution or the range accuracy comprises:
calculating the bandwidth occupied by the frequency domain resources allocated for the ISC signal by following formula:
${B}_{1} = \frac{c}{4 γ ⋅ Δd}$ or ${B}_{2} = \frac{c}{2 ΔR}$, wherein *B*₁ is the bandwidth occupied by the frequency domain resources allocated for the ISC signal, *B*₂ is the bandwidth occupied by the frequency domain resources allocated for the ISC signal,
*γ* is the algorithm factor, *ΔR* is the range resolution, *Δd* is the range accuracy;
*B*₁ is the bandwidth for a case where the target object is not recognized, *B*₂ is the bandwidth for a case where the target object is recognized.

13. The method according to claim 11, wherein the determining the quantity of subcarriers occupied by the frequency domain resources within the bandwidth based on the comb configuration parameter and the bandwidth comprises:
calculating the quantity of subcarriers occupied by the frequency domain resources within the bandwidth by using following formula: $M = \frac{B}{m ⋅ Δf} ,$
wherein *M* is the quantity of subcarriers occupied by the frequency domain resources within the bandwidth; $B = {B}_{1} or {B}_{2} ,$
*B*₁ is the bandwidth for a case where the target object is not recognized, *B*₂ is the bandwidth for a case where the target object is recognized; *Δf* is the subcarrier spacing, *m* is the comb configuration parameter.

14. The method according to claim 9 or 10, wherein,
the resource configuration information comprises first configuration information for a case where the target object is not recognized, and/or second configuration information for a case where the target object is recognized;
the first configuration information is generated based on the range accuracy and the comb configuration parameter;
the second configuration information is generated based on the range resolution and the comb configuration parameter.

15. A device, comprising:
a memory, a transceiver, and a processor, wherein the memory is configured to store a computer program; the transceiver is configured to receive and send data under control of the processor; the processor is configured to read the computer program in the memory and perform the following operations:
determining a frequency domain resource occupancy factor of an integrated sensing and communication (ISC) signal and a comb configuration parameter of the ISC signal;
generating the ISC signal based on the frequency domain resource occupancy factor and the comb configuration parameter;
sending the ISC signal based on resource configuration information.

16. The device according to claim 15, wherein the processor is configured to read the computer program in the memory and perform the following operations:
determining the frequency domain resource occupancy factor of the ISC signal according to a range resolution and/or a range accuracy; and/or
determining the comb configuration parameter of the ISC signal according to a maximum detection range.

17. The device according to claim 15 or 16, wherein the processor is configured to read the computer program in the memory and perform the following operations:
determining the frequency domain resource occupancy factor of the ISC signal according to the range accuracy in case that a target object is not recognized;
determining the frequency domain resource occupancy factor of the ISC signal according to the range resolution in case that the target object is recognized.

18. The device according to claim 16, wherein,
the range resolution comprises a range resolution required by a sensing service or a range resolution supported by a sensing device;
and/or
the range accuracy comprises a range accuracy required by the sensing service or a range accuracy supported by the sensing device;
and/or
the maximum detection range comprises a maximum detection range required by the sensing service or a maximum detection range supported by the sensing device.

19. The device according to claim 16, wherein the processor is configured to read the computer program in the memory and perform the following operations:
determining a preset signal length according to the range resolution and/or the range accuracy, wherein the preset signal length is greater than or equal to a total quantity of subcarriers, the total quantity of subcarriers is determined based on the range resolution or the range accuracy, and the preset signal length satisfies *M'_{ZC}* = *p* · 2*ⁿ* , wherein *M'_{ZC}* is the preset signal length, *n* is the frequency domain resource occupancy factor, and *p* is a subcarrier adjustment factor and is a positive integer;
determining the frequency domain resource occupancy factor based on the preset signal length.

20. The device according to claim 19, wherein the total quantity of subcarriers is $\frac{c}{2 Δf ⋅ ΔR}$ or $\frac{c}{4 γ ⋅ Δf ⋅ Δd}$, wherein *γ* is an algorithm factor, *Δf* is a subcarrier spacing, *c* is the speed of light, *ΔR* is the range resolution, and *Δd* is the range accuracy.

21. The device according to claim 15, wherein a value of the comb configuration parameter satisfies a spacing formula for a comb configuration and falls within a first range;
the spacing formula for the comb configuration is ${N}_{comb} = {2}^{m} \leq \frac{c}{2 {R}_{max} ⋅ Δf}$, wherein *N_{comb}* denotes a spacing of the comb configuration, *m* is the comb configuration parameter, *Δf* is the subcarrier spacing, *c* is the speed of light, and *Rₘₐₓ* is the maximum detection range.

22. The device according to claim 15, wherein the processor is configured to read the computer program in the memory and perform the following operations:
determining a length of the ISC signal according to the frequency domain resource occupancy factor and the comb configuration parameter;
generating the ISC signal of a corresponding length according to the length of the ISC signal;
wherein the length of the ISC signal is *M_{ZC}* = *p* · 2*^{n-m},*
wherein *M_{ZC}* is the length of the ISC signal, *n* is the frequency domain resource occupancy factor, *m* is the comb configuration parameter, and *p* is a subcarrier adjustment factor and is a positive integer.

23. The device according to claim 15, wherein the processor is configured to read the computer program in the memory and perform the following operations:
generating the resource configuration information;
or
receiving the resource configuration information sent by a second device.

24. The device according to claim 23, wherein the processor is configured to read the computer program in the memory and perform the following operations:
generating the resource configuration information according to the range resolution or the range accuracy and the comb configuration parameter.

25. The device according to claim 24, wherein the processor is configured to read the computer program in the memory and perform the following operations:
determining a bandwidth occupied by frequency domain resources allocated for the ISC signal according to the range resolution or the range accuracy;
determining a quantity of subcarriers occupied by the frequency domain resources within the bandwidth based on the comb configuration parameter and the bandwidth;
wherein the resource configuration information comprises the bandwidth and the quantity of subcarriers.

26. The device according to claim 25, wherein the processor is configured to read the computer program in the memory and perform the following operations:
calculating the bandwidth occupied by the frequency domain resources allocated for the ISC signal by a following formula: ${B}_{1} = \frac{c}{4 γ ⋅ Δd} or {B}_{2} = \frac{c}{2 ΔR} ,$
wherein *B*₁ and *B*₂ are both the bandwidth occupied by the frequency domain resources allocated for the ISC signal;
*γ* is the algorithm factor, *ΔR* is the range resolution, *Δd* is the range accuracy, *B*₁ is the bandwidth for a case where the target object is not recognized, *B*₂ is the bandwidth for a case where the target object is recognized.

27. The device according to claim 25, wherein the processor is configured to read the computer program in the memory and perform the following operations:
calculating the quantity of subcarriers occupied by the frequency domain resources within the bandwidth by the following formula: $M = \frac{B}{m ⋅ Δf} ,$
wherein *M* is the quantity of subcarriers occupied by the frequency domain resources within the bandwidth; *B* = *B*₁ or *B*₂, *B*₁ is the bandwidth for a case where the target object is not recognized, *B*₂ is the bandwidth for a case where the target object is recognized;
*m* is the comb configuration parameter, and *Δf* is the subcarrier spacing.

28. The device according to claim 23 or 24, wherein,
the resource configuration information comprises first configuration information for a case where the target object is not recognized, and/or second configuration information for a case where the target object is recognized;
the first configuration information is generated based on the range accuracy and the comb configuration parameter;
the second configuration information is generated based on the range resolution and the comb configuration parameter.

29. A processor-readable storage medium storing a computer program, wherein the computer program, when executed by a processor, implements the steps of the signal sending method according to any one of claims 1 to 14.
